# EUROPEAN PATENT APPLICATION

(11) **EP 4 734 626 A1**
(43) Date of publication of application: **29.04.2026**
(21) Application number: 23941920.3
(22) Date of filing: 21.06.2023
(51) Int. Cl.: H04W 72/04

(54) **INFORMATION TRANSMISSION METHOD AND APPARATUS, AND TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: LIU, Zhe, Dongguan, Guangdong 523860 (CN); CAO, Jianfei, Dongguan, Guangdong 523860 (CN)
(74) Representative: Penza, Giancarlo
(86) International application number: PCT/CN2023/101598
(87) International publication number: WO 2024/259616

(57) **Abstract**

The embodiments of the present application provide an information transmission method and apparatus, and a terminal device and a network device. The method comprises: a terminal device sending first information, wherein the first information is used for indicating one or more reference signal groups, and each of the one or more reference signal groups comprises one or more reference signals; and the terminal device sending second information, wherein the second information is used for indicating a transmission parameter set associated with each of the one or more reference signal groups, and the transmission parameter set is used for representing a terminal device capability corresponding to the reference signal groups associated with the transmission parameter set.

## Description

### TECHNICAL FIELD

Embodiments of the disclosure relate to the technical field of mobile communications, and in particular to a method and an apparatus for information transmission, a terminal device and a network device.

### BACKGROUND

With the development of communication technologies, terminal devices can support the simultaneous transmission of multiple pieces of uplink information to multiple transmission reception points (TRP) across multiple antenna panels to enhance uplink spectrum utilization.

In practical applications, the terminal device capabilities associated with respective panels of a terminal device are not entirely identical. The terminal device can dynamically switch the panels used for transmission. However, there is currently no specific method on how to update the terminal device capability associated with each panel.

### SUMMARY

The disclosure provides a method and an apparatus for information transmission, a terminal device and a network device, which can dynamically update the terminal device capability associated with each panel, so that the network device can perform transmissions with the terminal device based on the terminal device capability associated with each panel, thereby optimizing communication performance.

In a first aspect, a method for information transmission is provided, and the method includes the following operations.

A terminal device sends first information. The first information indicates one or multiple reference signal groups, and each of the one or the multiple reference signal groups includes one or multiple reference signals.

The terminal device sends second information. The second information indicates a transmission parameter set associated with each of the one or the multiple reference signal groups. The transmission parameter set is used to represent a terminal device capability corresponding to its associated reference signal group.

In a second aspect, a method for information transmission is provided, and the method includes the following operations.

A network device receives first information. The first information indicates one or multiple reference signal groups, and each of the one or the multiple reference signal groups includes one or multiple reference signals.

The network device receives second information. The second information indicates a transmission parameter set associated with each of the one or the multiple reference signal groups. The transmission parameter set is used to represent a terminal device capability corresponding to its associated reference signal group in a terminal device.

In a third aspect, an apparatus for information transmission is provided. The apparatus is applied to a terminal device and includes a sending unit.

The sending unit is configured to send first information. The first information indicates one or multiple reference signal groups, and each of the one or the multiple reference signal groups includes one or multiple reference signals.

The sending unit is further configured to send second information. The second information indicates a transmission parameter set associated with each of the one or the multiple reference signal groups. The transmission parameter set is used to represent a terminal device capability corresponding to its associated reference signal group.

In a fourth aspect, an apparatus for information transmission is provided. The apparatus is applied to a network device and includes a receiving unit.

The receiving unit is configured to receive first information. The first information indicates one or multiple reference signal groups, and each of the one or the multiple reference signal groups includes one or multiple reference signals.

The receiving unit is further configured to receive second information. The second information indicates a transmission parameter set associated with each of the one or the multiple reference signal groups. The transmission parameter set is used to represent a terminal device capability corresponding to its associated reference signal group in a terminal device.

In a fifth aspect, there is provided a terminal device, including a memory, a processor and a transceiver. The memory is configured to store a program. The processor is configured to execute the program. When the program is executed, the processor is configured to invoke the transceiver to perform the method in the first aspect.

In a sixth aspect, a network device is provided, and the network device includes a processor and a memory. The memory is configured to store a computer program, and the processor is configured to invoke and execute the computer program stored in the memory to perform the method for information transmission described in the second aspect.

In a seventh aspect, there is provided a computer-readable medium storing program code executable by a device, and the program code includes instructions for performing the method in the first aspect.

In an eighth aspect, there is provided a computer-readable medium storing program code executable by a device, and the program code includes instructions for performing the method in the second aspect.

In a ninth aspect, a system chip is provided. The system chip includes an input interface, an output interface, a processor and a memory. The processor is configured to execute code in the memory. When the code is executed, the processor may implement various processes executed by a terminal device in the method for information transmission in any one of the first aspect and various implementations.

In to a tenth aspect, a system chip is provided. The system chip includes an input interface, an output interface, a processor and a memory. The processor is configured to execute code in the memory. When the code is executed, the processor may implement various processes executed by a network device in the method for information transmission in any one of the second aspect and various implementations.

In the method for information transmission provided in the disclosure, while reporting one or multiple reference signal groups to the network device, the terminal device may also send a transmission parameter set(s) associated with each of the one or the multiple reference signal groups to the network device. In this way, the terminal device may combine group-based beam reporting with the transmission parameter sets, which enables the terminal device to report beams that may be used for simultaneous reception and/or sending, and simultaneously report the terminal device capability associated with each of panels corresponding to the beams. Therefore, the terminal device can dynamically update the terminal device capability associated with each panel, so that the network device can perform transmissions with the terminal device based on the terminal device capability associated with each panel, thereby optimizing communication performance.

### BRIEF DESCRIPTION OF THE DRAWINGS

The accompanying drawings illustrated herein are intended to provide a further understanding of the disclosure and form part of the disclosure. The schematic embodiments of the disclosure and their description are intended to explain the disclosure, and do not constitute an unduly limiting of the disclosure. In the accompanying drawings:
FIG. 1 is a schematic diagram of communication architecture according to an embodiment of the disclosure.
FIG. 2 is a schematic diagram of a time division multiplexing (TDM) transmission scenario according to an embodiment of the disclosure.
FIG. 3 is a schematic diagram of a space division multiplexing (SDM) transmission scenario according to an embodiment of the disclosure.
FIG. 4 is a schematic diagram of a single frequency network (SFN) transmission scenario according to an embodiment of the disclosure.
FIG. 5A to FIG. 5C are schematic diagrams illustrating the transmission using different panels according to embodiments of the disclosure.
FIG. 6 is a first schematic flowchart of a method for information transmission according to an embodiment of the disclosure.
FIG. 7 is a second schematic flowchart of a method for information transmission according to an embodiment of the disclosure.
FIG. 8 is a first structural schematic diagram of an apparatus for information transmission according to an embodiment of the disclosure.
FIG. 9 is a second structural schematic diagram of an apparatus for information transmission according to an embodiment of the disclosure.
FIG. 10 is a schematic structural diagram of a communication device according to an embodiment of the disclosure.
FIG. 11 is a schematic structural diagram of a chip according to an embodiment of the disclosure.
FIG. 12 is a schematic block diagram of a communication system according to an embodiment of the disclosure.

### DETAILED DESCRIPTION

The technical solutions in the embodiments of the disclosure will be described below with reference to the accompanying drawings in the embodiments of the disclosure. It will be apparent that the described embodiments herein are only part of but not all of the embodiments in the disclosure. Based on the embodiments in the disclosure, all other embodiments obtained by those of ordinary skilled in the art without creative effort fall within the scope of protection of the disclosure.

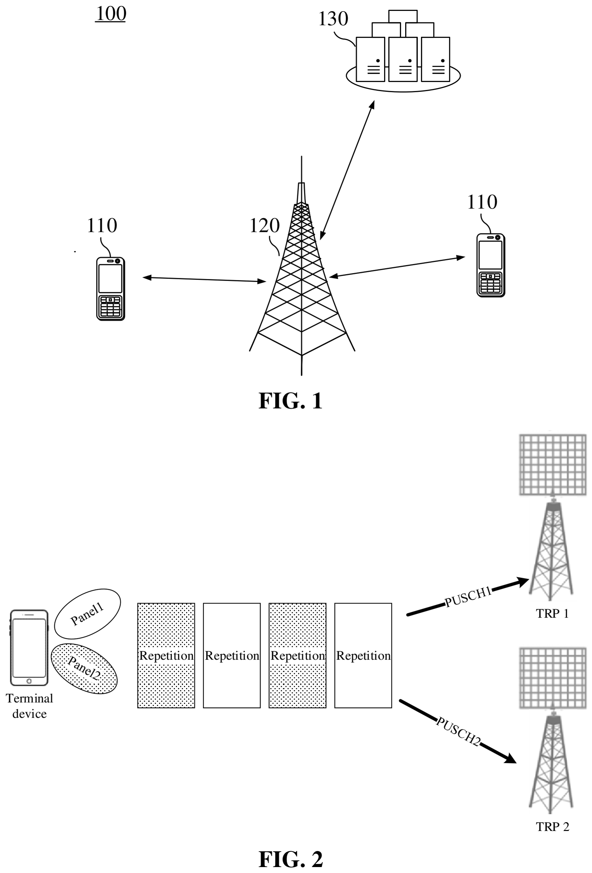

FIG. 1 is a schematic diagram of communication architecture according to an embodiment of the disclosure.

As illustrated in FIG. 1, a communication system 100 may include terminal devices 110 and a network device 120. The network device 120 may communicate with the terminal devices 110 via an air interface. Multi-service transmission is supported between the terminal devices 110 and the network device 120.

It should be understood that the embodiment of the disclosure illustrates only the communication system 100, but the embodiments of the disclosure are not limited thereto. That is to say, the technical solutions of the embodiments of the disclosure may be applied to various communication systems, such as a long term evolution (LTE) system, a LTE time division duplex (TDD), a universal mobile telecommunication system (UMTS), an Internet of things (IoT) system, a narrow band Internet of things (NB-IoT) system, an enhanced machine-type communications (eMTC) system, a 5G communication system (also referred to as a new radio (NR) communication system), or future communication systems, etc.

In the communication system 100 illustrated in FIG. 1, the network device 120 may be an access network device that communicates with the terminal devices 110. The access network device may provide communication coverage for a particular geographic area and may communicate with the terminal devices 110 (e.g., UE) within that coverage area.

The network device 120 may be an evolutional node B (eNB or eNodeB) in an LTE system, or a next generation radio access network (NG RAN) device, or a base station (gNB) in an NR system, or a wireless controller in a cloud radio access network (CRAN). Alternatively, the network device 120 may be a relay station, an access point, an in-vehicle device, a wearable device, a hub, a switch, a bridge, a router, or a network device in a future evolved public land mobile network (PLMN), etc.

The terminal device 110 may be any terminal device including, but not limited to, a terminal device connected to the network device 120 or other terminal devices via wired or wireless connections.

For example, the terminal device 110 may refer to an access terminal, user equipment (UE), a subscriber unit, a subscriber station, a mobile terminal, a mobile station, a remote station, a remote terminal, a mobile device, a user terminal, a terminal, a wireless communication device, a user agent or a user device. The access terminal may be a cellular telephone, a cordless telephone, a session initiation protocol (SIP) telephone, an IoT device, a satellite handheld terminal, a wireless local loop (WLL) station, a personal digital assistant (PDA) device, a handheld device with wireless communication capabilities, a computing device or other processing device connected to a wireless modem, an in-vehicle device, a wearable device, a terminal device in a 5G network, or a terminal device in a future evolved network.

The terminal device 110 may be used for device to device (D2D) communication.

The wireless communication system 100 may further include a core network device 130 that performs communication with the network device 120. The core network device 130 may be a 5G core (5GC) device, such as an access and mobility management function (AMF), or an authentication server function (AUSF), or a user plane function (UPF), or session management function (SMF). Optionally, the core network device 130 may also be an evolved packet core (EPC) device of an LTE network, such as a session management function + core packet gateway (SMF + PGW-C) device. It is to be understood that the SMF + PGW-C may simultaneously implement functions that can be achieved by both the SMF and the PGW-C. In the process of network evolution, the above-mentioned core network device may also be called by other names, or a new network entity may be formed by performing partition on the functions of the core network, which is not limited in the embodiments of the disclosure.

The various functional units in the communication system 100 may also establish a connection between each other via a next generation (NG) network interface to achieve communication.

For example, the terminal device establishes an air interface connection with the access network device via the NR interface, for the transmission of user plane data and control plane signaling. The terminal device may establish a control plane signaling connection with the AMF via the NG interface 1 (N1 for short). The access network device, such as the next generation radio access base station (gNB), may establish a user plane data connection with the UPF via the NG interface 3 (N3 for short). The access network device may establish a control plane signaling connection with the AMF via the NG interface 2 (N2 for short). The UPF may establish a control plane signaling connection with the SMF via the NG interface 4 (N4 for short). The UPF may interact user plane data with the data network via the NG interface 6 (N6 for short). The AMF may establish a control plane signaling connection with the SMF via the NG interface 11 (N11 for short). The SMF may establish a control plane signaling connection with the PCF via the NG interface 7 (N7 for short).

FIG. 1 exemplifies one network device, one core network device, and two terminal devices. Optionally, the wireless communication system 100 may include multiple network devices, and another number of terminal devices may be included in the coverage range of each network device, which is not limited in the embodiment of the disclosure.

It is to be noted that, FIG. 1 illustrates, by way of example only, the system to which the disclosure is applicable, and the method illustrated in the embodiments of the disclosure may also be applied to other systems. Furthermore, in this context, the terms "system" and "network" are generally used interchangeably herein. In this context, the term "and/or" merely indicates an association relationship for describing associated objects, and represents that there are three kinds of relationships. For example, "A and/or B" may represent three situations, i.e., independent existence of A, existence of both A and B, and independent existence of B. In addition, in this context, the character "/" generally indicates that the anterior and posterior associated objects are in a kind of "or" relationship. It is also to be understood that "indicate/indication" mentioned in the embodiments of the disclosure may be a direct indication, or may be an indirect indication, or may represent that there is an association relationship. For example, A indicates B, which may represent that A indicates B directly, for example, B may be acquired through A; or, may represent A indicate B indirectly, for example, A indicates C, and B may be acquired through C; or may represent that there is an association relationship between A and B. It is also to be understood that "correspond/correspondence" mentioned in the embodiments of the disclosure may represent that there is a direct or indirect correspondence between the two objects; or, may represent that there is an association relationship between two objects; or, may be a relationship such as indicating and being indicated, configuring and being configured, etc. It is also to be understood that "predefined/predefinition" or "predefined rule" mentioned in the embodiments of the disclosure may be implemented by storing corresponding codes, tables, or other means that may be used to indicate relevant information in advance within a device (including, for example, a terminal device and a network device), the specific implementation thereof are not be limited in the disclosure. For example, "predefined" may be "defined in a protocol". It is also to be understood that, in an embodiment of the disclosure, the "protocol" may be a standard protocol in the field of communications, and for example, it may include an LTE protocol, an NR protocol, and relevant protocols applied to future communication systems, which are not limited in the disclosure.

For convenience of understanding of technical solutions in the embodiments of the disclosure, the related technologies of the embodiments of the disclosure will be elaborated below. The following related technologies, as optional solutions, may be arbitrarily combined with the technical solutions in the embodiments of the disclosure, all of which belong to the scope of protection of the embodiments of the disclosure.

### 1. Measurement and reporting of downlink beam

The terminal device may measure beam-related downlink reference signals (such as a channel state information reference signal (CSI-RS), a synchronization signal block (SSB)), and then report K ≥ 1 piece of information to the network device based on the measurement result. Each piece of information reported by the terminal device may include beam indication information (such as CSI-RS identification information, SSB identification information), and corresponding layer 1 reference signal receiving power (L1-RSRP) information and layer 1 signal to interference plus noise ratio (L1-SINR). When K > 1, the terminal device may directly report the quantization result of the maximum L1-RSRP value among the K L1-RSRP values, and the terminal device may quantify the differences between the other K-1 L1-RSRP values and the maximum L1-RSRP value and report them, i.e., report differential values for the other K-1 L1-RSRP values. The reporting method of L1-SINR is similar to that of L1-RSRP, details of which will not be repeated herein for brevity.

In some embodiments, based on whether the terminal device may receive data transmitted simultaneously over K downlink beams, the reporting methods for beam measurement results may be classified into: non-group based reporting method and group based reporting method.

In the non-group based reporting, the terminal device measures N reference signals configured by the network, and selects to report K pieces of information based on the measurement results. The value of K is configured by the network and may be 1, 2, 3 or 4. The K reference signals correspond to K beams. The network cannot simultaneously transmit signals over multiple beams among the K beams to the terminal device, because the terminal device cannot simultaneously receive signals transmitted over multiple downlink beams. When reporting K pieces of information, the terminal device may select K reference signals from N reference signals based on its own implementation algorithm. For example, the terminal device may only consider the K reference signals with the highest L1-RSRP values, or the terminal device may consider the directions of arrival of different beams (that is, considering the spatial correlation between different received reference signals) to select the K reference signals.

The group based reporting requires the terminal device to have the capability of simultaneously receiving multiple downlink transmission beams. When the group based reporting is configured for the terminal device by the network, the terminal device measures N reference signals configured by the network, and selects to report K pieces of information based on the measurement results. Each piece of information includes indication information of a reference signal (such as the CSI-RS identification information, the SSB identification information) and corresponding L1-RSRP information. The network may simultaneously perform data transmission with the terminal over the reported K = 2 beams.

### 2. Physical uplink shared channel (PUSCH) transmission scheme for multiple TRPs

In the NR system, non-coherent downlink and uplink transmissions based on multiple TRPs have been introduced. The backhaul connection between TRPs may be either ideal or non-ideal. Under an ideal backhaul, TRPs may rapidly and dynamically exchange information with each other; while under a non-ideal backhaul, TRPs may only engage in quasistatic information interaction due to significant latency. In the non-coherent downlink transmissions, the multiple TRPs may independently schedule multiple physical downlink shared channel (PDSCH) transmission for a terminal device using different control channels, or the multiple TRPs may schedule transmissions from different TRPs using a same control channel, where the data from different TRPs employs different transmission layers. The latter approach is only applicable in the ideal backhaul situation.

In the discussion of Rel-17, the terminal device may send PUSCH to two TRPs in a TDM manner. Referring to FIG. 2, taking slot-based TDM repetition transmission as an example, the terminal device may send two sets of PUSCH (with the same or different redundancy versions) through two panels at the same symbol position of K consecutive slots, and each set of PUSCH is associated with a sounding reference signal (SRS) resource set.

In some embodiments, the network device may schedule the terminal device to transmit PUSCH to two TRPs through a single downlink control information (DCI). The PUSCH transmissions to the two TRPs may be configured with independent transmission parameters, such as beams and precoding matrices, but with the constraint that the number of transmission layers for the PUSCHs transmitted to the two TRPs is the same. The terminal device performs analog beamforming on the PUSCH transmissions to different TRPs by aligning them with the corresponding TRPs, thereby distinguishing different PUSCHs in the spatial domain and improving uplink spectrum efficiency.

For codebook-based PUSCH transmission, the single DCI needs to contain two precoding information and number of transmission layers fields, as well as two SRS resource indicator (SRI) fields. The first precoding information and number of transmission layers field indicates the precoding information and the number of transmission layers for the PUSCH sent to TRP1, and the second precoding information and number of transmission layers field indicates the precoding information and the number of transmission layers for the PUSCH sent to TRP2. It is to be noted that, the number of transmission layers for the PUSCH sent to the TRP2 is identical to the number of transmission layers indicated by the first precoding information and number of transmission layers field. The second precoding information and number of layers field is only required to indicate the precoding information, while the number of transmission layers defaults to being identical to the number of transmission layers indicated by the first precoding information and number of layers field. Additionally, the first SRI domain is used to indicate the beam direction for the PUSCH sent to the TRP1, while the second SRI domain is used to indicate the beam direction for the PUSCH sent to the TRP2. The network device configures two SRS resource sets. The first SRI domain and the second SRI domain respectively correspond to the two SRS resource sets, which are used to indicate the respective beam directions of the PUSCH transmissions to the two TRPs.

For non-codebook-based PUSCH transmission, the single DCI needs to contain two SRI fields. The first SRI field is used to indicate the beam direction and the number of transmission layers for the PUSCH sent to the TRP1, the second SRI field is used to indicate the beam direction for the PUSCH sent to the TRP2, and the number of transmission layers for the PUSCH sent to the TRP2 is identical to the number of transmission layers indicated by the first SRI.

In some embodiments, the network device may also schedule the terminal device to transmit PUSCH to two TRPs through multiple DCIs, and these DCIs may be carried through different control resource sets (CORESETs). Multiple CORESET groups are configured by the network side, and each TRP is scheduled by CORESETs in its respective CORESET group, that is, different TRPs may be distinguished by the CORESET groups. For example, the network device may configure a CORESET group index for each CORESET, and different indexes correspond to different TRPs.

### 3. Uplink multi-panel/TRP transmission scheme

In the discussion of Rel-18, the currently supported schemes include space division multiplexing (SDM) transmission scheme, single frequency network (SFN) transmission scheme, and TDM transmission scheme.

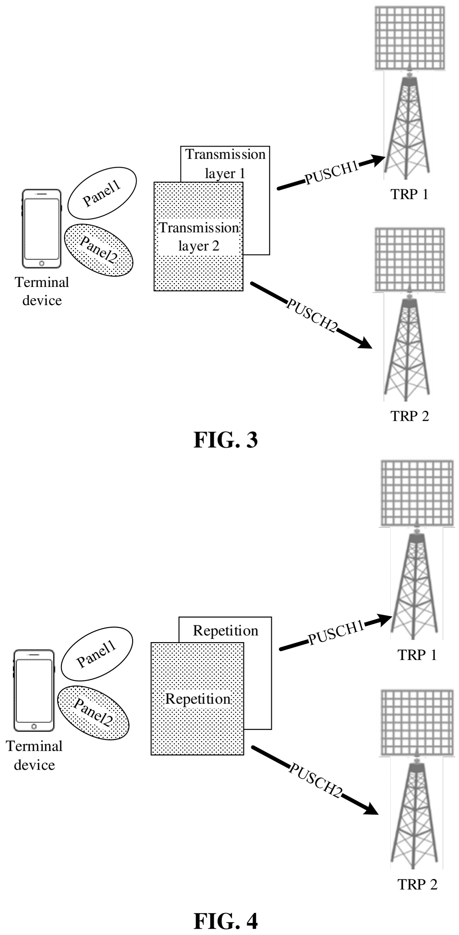

Referring to the SDM transmission scheme illustrated in FIG. 3, different transmission layers of a PUSCH are sent to different TRPs through different panels of the terminal device. Different transmission layers occupy the same uplink resources, but they are associated with different SRS resource sets and different TCI states.

Referring to the SFN transmission scheme illustrated in FIG. 4, repetitions of PUSCH are sent to different TRPs through different panels. PUSCH1 and PUSCH2 occupy the same uplink resources, but are associated with different SRS resources sets and different Transmission Configuration Indicator (TCI) states.

In the discussion of Rel-18, the multi-panel/TRP transmission scheme can only support scenarios where the terminal device capabilities associated with multiple panels are the same. In other words, for the following configurations, the two SRS resource sets respectively associated with the two panels are identically configured.

The number of SRS resources in each SRS resource set is the same.

The number of ports of the indicated SRS resources is the same.

The maximum number of transmission layers associated with each SRS resource set is the same.

In the discussion of Rel-18, the number of SRS resources in an SRS resource set, the number of ports of the SRS resources, and the maximum number of transmissions layers associated with each SRS resource set are all configured via RRC signaling and are set to the same value.

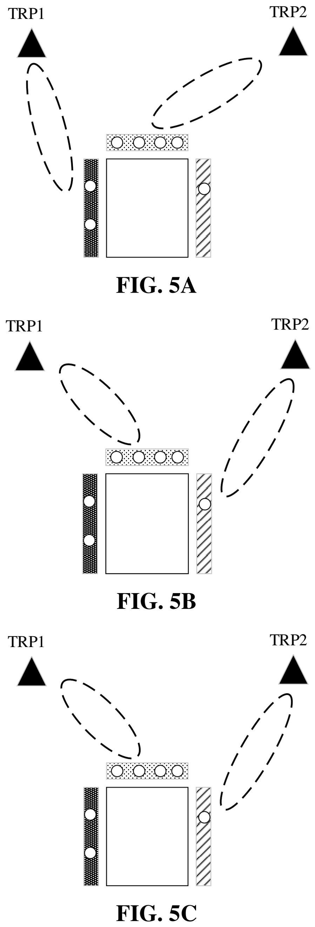

In practical applications, the terminal device may be equipped with multiple panels. The terminal device capabilities associated with each panel are not entirely identical. For example, referring to FIG. 5A to FIG. 5C, the terminal device may be equipped with 3 panels, which are associated with 1 port, 2 ports, and 4 ports for SRS respectively. The terminal device may use different panels for data transmission. As shown in FIG. 5A, the terminal device may utilize a 2-port panel for transmission with TRP1 and a 4-port panel for transmission with TRP2. As shown in FIG. 5B, the terminal device may utilize a 4-port panel for transmission with TRP1 and a 1-port panel for transmission with TRP2. As shown in FIG. 5C, the terminal device may utilize a 2-port panel for transmission with TRP1 and a 1-port panel for transmission with TRP2.

The terminal device can dynamically switch the panels used for sending uplink transmission and receiving downlink transmission. The group-based beam reporting may inform the network device of the beams capable of simultaneous data reception and/or data sending, but it is not combined with the reporting of the terminal device capabilities associated with each panel, resulting in that the terminal device cannot dynamically update the terminal device capabilities associated with each panel.

In addition, in related technologies, the terminal device can only reflect the terminal device capabilities associated with each panel by reporting the maximum number of SRS ports supported by a single beam. However, since all SRS ports used for non-codebook PUSCH transmission are single-port, it seems that reporting the maximum number of SRS ports supported by a single beam (especially when the maximum number of SRS ports is greater than 1) does not reflect the terminal device capability associated with each panel in non-codebook PUSCH transmission. That is to say, the aforementioned approach is only applicable to codebook-based PUSCH transmission.

Based on this, there is provided a method for information transmission in an embodiment of the disclosure. For convenience of understanding of technical solutions in the embodiments of the disclosure, the technical solutions in the disclosure are described in detail by way of specific embodiments hereinafter. The above related technologies, as alternatives, may be arbitrarily combined with the technical solutions in the embodiments of the disclosure, all of which belong to the scope of protection of the embodiments of the disclosure. The embodiments of the disclosure include at least some of the following contents.

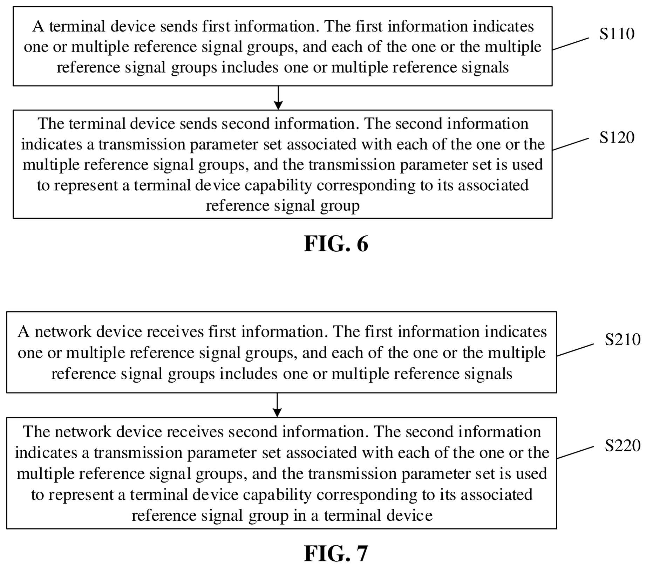

FIG. 6 illustrates a method for information transmission according to an embodiment of the disclosure. The method may include the following operations S110, S120.

In operation S110, a terminal device sends first information. The first information indicates one or multiple reference signal groups, and each of the one or the multiple reference signal groups includes one or multiple reference signals.

In operation S120, the terminal device sends second information. The second information indicates a transmission parameter set associated with each of the one or the multiple reference signal groups. The transmission parameter set is used to represent a terminal device capability corresponding to its associated reference signal group.

In some embodiments, the terminal device may send the first information and the second information to the network device.

In the embodiments of the disclosure, the terminal device may be equipped with multiple panels and has the capability to simultaneously send and/or simultaneously receive multiple reference signals. Accordingly, the terminal device in the embodiments of the disclosure may support the group-based beam reporting.

It is to be understood that the first information sent by the terminal device to the network device may indicate one or multiple reference signal groups. The first information may include identification information of the one or multiple reference signal groups or identification information of each reference signal in the one or multiple reference signal groups. In other words, the terminal device may report, through the first information, the identification information of each reference signal in the one or the multiple reference signal groups to the network device. Alternatively, the terminal device may report one or multiple groups of reference signal identification information to the network device. In this way, the terminal device may indicate the one or the multiple reference signal groups to the network device through the above identification information.

Each of the one or the multiple reference signal groups may include one or multiple reference signals. Each reference signal may correspond to one beam. In case that each reference signal group includes multiple reference signals, the terminal device may be configured to perform one or more of the following operations.

The multiple reference signals in each reference signal group are simultaneously received and/or simultaneously sent by the terminal device.

Data are simultaneously received and/or simultaneously sent by the terminal device on a spatial filter determined by the multiple reference signals in each reference signal group.

In other words, the operation that the terminal device sends the first information indicating the one or the plurality of reference signal groups to the network device may be understood as that, the terminal device indicates to the network device, through the first information, the beams that it can use for simultaneous reception and/or simultaneous sending. The beams that are simultaneously received and/or simultaneously sent are represented by reference signals in a reference signal group.

In some embodiments, the reference signal group mentioned in the above embodiments may include one or more of:
a channel state information reference signal (CSI-RS) group;
a synchronization signal block (SSB) group; or
a sounding reference signal (SRS) group.

The CSI-RS group may include one or more CSI-RSs. The SSB group may include one or more SSBs. The SRS group may include one or more SRSs.

In some embodiments, the first information may carry identification information of each of the one or multiple reference signal groups or identification information of each reference signal in the one or multiple reference signal groups, to indicate the one or the multiple reference signal groups.

In an example, the network device may configure multiple reference signal groups in advance, and each of the multiple reference signal groups corresponds to a piece of identification information. The terminal device may carry the identification information of the one or multiple reference signal groups to be reported in the first indication information, to indicate the one or multiple reference signal groups.

In another example, the network device may configure the identification information of the multiple reference signals in advance, and each reference signal corresponds to a piece of identification information. The terminal device may carry the identification information of each reference signal in the one or multiple reference signal groups to be reported in the first indication information, or carry the identification information of one or multiple groups of reference signals to be reported in the first indication information, to indicate the one or multiple reference signal groups. The terminal device may carry one or more groups of CSI-RS identification information, such as CSI-RS resource indicators (CRI), in the first information. Alternatively, the terminal device may carry one or more groups of SSB identification information, such as SS/PBCH block resource indicators (SSBRI), in the first information. Alternatively, the terminal device may carry one or more groups of SRS identification information, such as SRS resource indicators (SRSRI), in the first information.

It is to be noted that, in case that the reference signal group includes multiple reference signals, different reference signals in the reference signal group may correspond to the same reference signal resource set or different reference signal resource sets, which is not limited in the embodiments of the disclosure.

In some embodiments, in case that the reference signal group includes multiple reference signals, different reference signals in the reference signal group correspond to different reference signal resource sets. In this way, interference between multiple beams used for simultaneous reception and/or simultaneous sending can be avoided, thereby improving communication efficiency.

In the embodiments of the disclosure, while sending the first information, the terminal device may send the second information to the network device, where the second information indicates the transmission parameter set(s) associated with each of the one or the multiple reference signal groups in the first information.

Each reference signal group is associated with one or multiple transmission parameter sets. For example, the terminal device may indicate, through the second information, one transmission parameter set associated with each reference signal group in the first information. Alternatively, the terminal device indicates, through the second information, one transmission parameter set associated with each reference signal in the first information, where the reference signal is a reference signal in each of the one or the multiple reference signal groups.

It is to be noted that, the first information and the second information may be carried in the same information and sent to the network device, or they may be carried in separate information and sent to the network device, which are not limited in the embodiments of the disclosure.

In some embodiments, the transmission parameter set includes one or more of:
index information of a sounding reference signal (SRS) resource set;
a maximum number of supported SRS ports;
a maximum number of transmission layers;
a maximum number of SRS resources in the SRS resource set; or
capability of the SRS resource set.

In some embodiments, the capability of the SRS resource set includes one or more of:
a maximum number of SRS resource sets supported by each band width part (BWP), a maximum number of SRS resources supported by each BWP, or a maximum number of SRS ports supported by each BWP.

It is to be understood that the terminal device capability associated with the panel or the terminal device capability may be reflected by one or more of: the index information of the SRS resource set, the number of SRS ports, the maximum number of transmission layers, the maximum number of SRS resources in the SRS resource set or the capability of the SRS resource set. Different terminal device capabilities support different transmission parameter sets.

In some embodiments, the transmission parameter set may also be referred to as a capability index.

It is to be noted that, the maximum number of transmission layers may be the maximum number of transmission layers for codebook-based transmission or the maximum number of transmission layers for non-codebook-based transmission.

It can be seen that in the embodiments of the disclosure, the transmission parameter set(s) reported by the terminal device to the network device may include a variety of transmission information, not only the maximum number of supported SRS ports. In addition to the information of the maximum number of supported SRS ports, in the transmission parameter set, the maximum number of transmission layers may be especially used for codebook-based PUSCH transmission and non-codebook-based PUSCH transmission. In other words, the method for information transmission according to the embodiments of the disclosure may support both codebook-based uplink transmission and non-codebook-based uplink transmission.

It is to be noted that the terminal device capability mentioned in the embodiments of the disclosure may also be referred to as a terminal device capability associated with a panel, and the two terms may be used interchangeably. Herein, the terminal device capability or the terminal device capability associated with the panel may also be understood as a panel capability.

It is to be understood that the terminal device capability associated with the panel may be reflected through the transmission parameter set. In other words, the transmission parameter set(s) associated with each reference signal group in the embodiments of the disclosure may reflect the terminal device capability associated with each of panels corresponding to the reference signal group.

In summary, in the method for information transmission provided in the disclosure, while reporting one or multiple reference signal groups to the network device, the terminal device may also send a transmission parameter set(s) associated with each of the one or the multiple reference signal groups to the network device. In this way, the terminal device may combine group-based beam reporting with the transmission parameter set(s), which enables the terminal device to report beams that may be used for simultaneous reception and/or sending, and simultaneously the terminal device capability associated with each of panels corresponding to the beams. Therefore, the terminal device can dynamically update the terminal device capability associated with each panel, so that the network device can perform transmissions with the terminal device based on the terminal device capability associated with each panel, thereby optimizing communication performance.

In the embodiments of the disclosure, the terminal device may report the transmission parameter set associated with each of the one or the multiple reference signal groups to the network device through various methods.

In one possible implementation, the second information sent by the terminal device to the network device may directly include the transmission parameter set associated with each reference signal group.

That is to say, the second information may carry one or more of: the index information of the SRS resource set associated with each reference signal set, the number of SRS ports, the maximum number of transmission layers, the maximum number of SRS resources in the SRS resource set or the capability of the SRS resource set.

In another possible implementation, the second information sent by the terminal device to the network device may include only index information of the transmission parameter set associated with each reference signal group, to reduce the number of bits of the second information.

In this implementation, the index information is used to determine, among the multiple transmission parameter sets, a transmission parameter set(s) associated with each reference signal group. It is to be understood that, the network device may determine the specific contents of the multiple transmission parameter sets in advance. In this way, after receiving the second information, the network device may find out, among the multiple transmission parameter sets, the transmission parameter set(s) associated with each reference signal group based on the index information of the transmission parameter set(s) associated with each reference signal group,.

In some embodiments, the specific contents of the multiple transmission parameter sets may be predefined, or may be reported by the terminal device to the network device through third information, which are not limited in the embodiments of the disclosure. The third information is different from the second information.

In some embodiments, the third information may be capability report information of the terminal device, or the third information may also be semi-static configuration information, which is not limited in the embodiments of the disclosure.

For example, the number of the multiple transmission parameter sets may be m, and m is an integer greater than or equal to 1. The specific configuration of the third information is as follows.

```
TransmissionParameterSet SEQUENCE {
 TransmissionParameterSet1 OPTIONAL,
 TransmissionParameterSet2 OPTIONAL,
 TransmissionParameterSet3 OPTIONAL,
 ......
 TransmissionParameterSetm OPTIONAL,
 }
```

Taking the transmission reference set 1 as an example, the specific configuration of each transmission parameter set is as follows.

```
TransmissionParameterSet1 SEQUENCE {
 SRS-ResourceSetIndex OPTIONAL,
 maxNumberOfLayers 1 ENUMERATED {nl, n2, n4} OPTIONAL,
 maxNumberOfSRS-Ports ENUMERATED {n1, n2, n4} OPTIONAL,
 maxNumberOfSRS-ResourcesInSRS-ResourceSet OPTIONAL,
 SRS-ResourceSetCaoability1 OPTIONAL,
 }
```

It is to be noted that, the number of transmission parameter sets associated with each reference signal group indicated by the second information may be one or more.

In some embodiments, in case that the reference signal group is associated with one transmission parameter set, the reference signal group includes one reference signal, or the reference signal group includes multiple reference signals, where the multiple reference signals correspond to the same terminal device capability. It is to be understood that when the multiple reference signals correspond to the same terminal device capability, the multiple reference signals are associated with a same transmission parameter set. In other words, when the multiple reference signals correspond to a same terminal device capability, the multiple reference signals may share a same transmission parameter set.

That is to say, when one reference signal group is associated with one transmission parameter set, the reference signal group may include only one reference signal, or the reference signal group may include multiple reference signals, and these reference signals share the one transmission parameter set associated with the reference signal group.

For example, the terminal device may report one or more groups of reference signal identification information to the network device through the first information. For example, the terminal device may report to the network device one or more sets of CRIs, or one or more sets of SSBRIs, or one or more sets of SRSRIs.

When a certain group of reference signal identification information includes only one piece of reference signal identification information, the second information may only indicate one transmission parameter set associated with the group of reference signal identification information. When a certain group of reference signal identification information includes p pieces of reference signal identification information, where p is an integer greater than or equal to 2, if the reference signals indicated by the p pieces of reference signal identification information correspond to a same terminal device capability, then the second information may indicate that the group of reference signal identification information may be associated with only one transmission parameter set. That is to say, the p pieces of reference signal identification information may be associated with one transmission parameter set.

In other embodiments, in case that the reference signal group is associated with multiple transmission parameter sets, the reference signal group includes multiple reference signals. The multiple reference signals are associated with the multiple transmission parameter sets respectively.

It is to be understood that the terminal device reports multiple associated parameter sets for each reference signal group, which can be applied to scenarios where the terminal device capabilities corresponding to respective reference signals in the reference signal group are different, thereby making the reporting method for the transmission parameter set more flexible.

Optionally, the multiple reference signals in the reference signal group may be in one-to-one correspondence with the multiple transmission parameter sets associated with the reference signal group (i.e., one reference signal is associated with one transmission parameter set). Alternatively, the multiple reference signals in the reference signal group may be in many-to-one correspondence with the multiple transmission parameter sets associated with the reference signal group (i.e., multiple reference signals are associated with one transmission parameter set), which are not limited in the embodiments of the disclosure.

It is to be noted that, the terminal device capabilities corresponding to reference signals associated with the same transmission parameter set may be the same.

Optionally, the number of transmission parameter sets associated with a reference signal group may be the same as the number of reference signals included in the reference signal group. One reference signal may be associated with one transmission parameter set. The transmission parameter sets associated with different reference signals may be the same or different, which are not limited in the embodiments of the disclosure. That is to say, the terminal device may indicate, through the second information, one transmission parameter set associated with each reference signal in the first information, where the reference signal is a reference signal in each of the one or the multiple reference signal groups.

In an example, the terminal device may report one or more groups of reference signal identification information to the network device through the first information. For example, the terminal device may report to the network device one or more sets of CRIs, or one or more sets of SSBRIs or one or more sets of SRSRIs. When a certain group of reference signal identification information includes p pieces of reference signal identification information, where p is an integer greater than or equal to 2, the second information may indicate p transmission parameter sets respectively associated with the p pieces of reference signal identification information. The transmission parameter sets associated with different reference signal identification information may be the same or different.

In the embodiments of the disclosure, the terminal device may report the transmission parameter set(s) associated with the reference signal group to the network device through different methods, thereby enhancing the flexibility of reporting the parameter set.

In an embodiment of the disclosure, the first information and/or the second information may be carried in a measurement report. The measurement report may be a measurement report for a reference signal(s) to be reported. For example, the measurement report may be a measurement report for CSI-RS, that is, a CSI measurement report. The measurement report may also be a measurement report for other types of reference signals, which is not limited in the embodiments of the disclosure.

In some embodiments, the measurement report may include fourth information in addition to the first information and/or the second information. The fourth information indicates an RSRP and/or an SINR of each reference signal in each reference signal group in the first information.

In one possible implementation, the fourth information may directly include the RSRP and/or the SINR of each reference signal in each reference signal group.

That is to say, the true value of the RSRP and/or the SINR of each reference signal in each reference signal group may be directly included in the measurement report.

In another possible implementation, the fourth information may include true values of the RSRPs and/or the SINRs of partial reference signals, and differential values between the RSRPs and/or the SINRs of other reference signals and the true value.

It is to be understood that, in order to reduce the number of bits in the measurement report, the measurement report may only carry the true values of the RSRPs and/or the SINRs of the partial reference signals. While for the RSRPs and/or the SINRs of the other reference signals, the measurement report may carry the respective differential values between the RSRPs and/or the SINRs of the other reference signals and the true value.

In an example, the fourth information may include one or more of:
first indication information for indicating a target reference signal group, where the target reference signal group is any one of the multiple reference signal groups;
an RSRP and/or an SINR of each target reference signal in the target reference signal group; or
for each reference signal group among the multiple reference signal groups that is not the target reference signal group, a differential value between an RSRP of each reference signal in the reference signal group and an RSRP of a respective associated target reference signal, and/or a differential value between an SINR of each reference signal in the reference signal group and an SINR of a respective associated target reference signal.

It is to be understood that the first indication information may indicate any one of the multiple reference signal groups as the target reference signal group.

In one possible implementation, the first indication information may indicate the target reference signal group by means of bitmap. For example, the number of multiple reference signal groups is k, and the first indication information may include k bits, respectively corresponding to k reference signal groups. When the value of a bit in the first indication information is a first value (for example, 0 or 1), it indicates that a reference signal group corresponding to the bit is the target reference signal group.

In another possible implementation, the first indication information may further indicate the target reference signal group by the mapping result of a bit field. For example, the number of multiple reference signal groups is k, and the first indication information may include q bits. Different mapping results of the q-bit field may correspond to different reference signal groups. For example, when the q-bit field maps to an index value of 0, it indicates that the first reference signal group is the target reference signal group. When the q-bit field maps to an index value of 1, it indicates that the second reference signal group is the target reference signal group; and so on. When the q-bit field maps to an index value of 2^{q}-1, it indicates that the 2^{q}-th reference signal group is the target reference signal group.

In this example, the fourth information may carry the true value of RSRP and/or SINR of each reference signal in the target reference signal group, and further carry a differential value between RSRP of each reference signal in each of the other reference signal groups, except the target reference signal group, among the multiple reference signal groups and the RSRP of an associated target reference signal, and/or a differential value between SINR of each reference signal in each of the other reference signal groups, except the target reference signal group, among the multiple reference signal groups and the SINR of an associated target reference signal.

That is to say, the terminal device may use the true value of the RSRP and/or the SINR of each reference signal in the target reference signal group as a reference value, to determine the differential value of the RSRP and/or the differential value of the SINR of each reference signal in the other reference signal groups.

For example, the differential value of the RSRP of a first reference signal in the other reference signal groups may be a differential result between the true value of the RSRP of the first reference signal and the true value of the RSRP of a first reference signal in the target reference signal group. The differential value of the SINR of a first reference signal in the other reference signal groups may be a differential result between the true value of the SINR of the first reference signal and the true value of the SINR of a first reference signal in the target reference signal group. The differential value of the RSRP of a second reference signal in the other reference signal groups may be a differential result between the true value of the RSRP of the second reference signal and the true value of the RSRP of a second reference signal in the target reference signal group. The differential value of the SINR of a second reference signal in the other reference signal groups may be a differential result between the true value of the SINR of the second reference signal and the true value of the SINR of a second reference signal in the target reference signal group; and so on. The differential value of the RSRP of the last reference signal in the other reference signal groups may be a differential result between the true value of the RSRP of the last reference signal and the true value of the RSRP of the last reference signal in the target reference signal group. The differential value of the SINR of the last reference signal in the other reference signal groups may be a differential result between the true value of the SINR of the last reference signal and the true value of the SINR of the last reference signal in the target reference signal group.

For another example, the differential value of the RSRP of each reference signal in the other reference signal groups may be a differential result between the true value of the RSRP of each reference signal and the true value of the RSRP of a specific reference signal in the target reference signal group. The differential value of the SINR of each reference signal in the other reference signal groups may be a differential result between the true value of the SINR of each reference signal and the true value of the SINR of a specific reference signal in the target reference signal group. The specific reference signal may be any one reference signal in the target reference signal group.

In another example, the fourth information includes one or more of:
first indication information for indicating a target reference signal group, where the target reference signal group is any one of the multiple reference signal groups;
an RSRP and/or an SINR of a first target reference signal in the target reference signal group, where the first target reference signal is any one of multiple target reference signals in the target reference signal group;
for each target reference signal in the target reference signal group that is not the first target reference signal, a differential value between an RSRP of the target reference signal and an RSRP of the first target reference signal, and/or a differential value between an SINR of the target reference signal and an SINR of the first target reference signal; or
for each reference signal group in the multiple reference signal groups that is not the target reference signal group, a differential value between an RSRP of each reference signal in the reference signal group and the RSRP of the first target reference signal, and/or a differential value between an SINR of each reference signal in the reference signal group and the SINR of the first target reference signal.

It is to be understood that the relevant description of the first indication information may be referred to above contents. For brevity, details will not be repeated herein again.

Optionally, in the previous example, the fourth information further includes second indication information.

The second indication information indicates the first target reference signal.

In this example, in order to further reduce the number of bits of the measurement report, the fourth information may include only the true value of the RSRP and/or the SINR of one reference signal (i.e. the RSRP and/or the SINR of the first target reference signal). The RSRP and/or the SINR of each of the remaining reference signals are carried differentially.

The fourth information may carry the true value of the RSRP and/or the SINR of the first target reference signal in the target reference signal group. The target reference signal group may be indicated by the first indication information, and the first target reference signal may be indicated by the second indication information.

It is to be noted that the true value and differential value of the RSRP and/or the SINR of each reference signal mentioned in the embodiment of the disclosure refer to quantized values.

In summary, in the method for information transmission provided in the disclosure, while reporting one or multiple reference signal groups to the network device, the terminal device may also send a transmission parameter set(s) associated with each of the one or the multiple reference signal groups to the network device. In this way, the terminal device may combine group-based beam reporting with the transmission parameter sets, which enables the terminal device to report beams that may be used for simultaneous reception and/or sending, and simultaneously the terminal device capability associated with each panel corresponding to the beams. Therefore, the terminal device can dynamically update the terminal device capability of each panel, so that the network device can perform transmissions with the terminal device based on the terminal device capability associated with each panel, thereby optimizing communication performance. In addition, in the embodiments of the disclosure, the transmission parameter set(s) reported by the terminal device to the network device may include a variety of transmission information, not only the maximum number of supported SRS ports. In addition to the information of the maximum number of supported SRS ports, in the transmission parameter set, the maximum number of transmission layers may be especially used for codebook-based PUSCH transmission and non-codebook-based PUSCH transmission. In other words, the method for information transmission according to the embodiments of the disclosure may support both codebook-based uplink transmission and non-codebook-based uplink transmission, thereby expanding the application scenarios for reporting the transmission parameter set.

The foregoing has provided a detailed description of the method for information transmission according to the embodiment of the disclosure from the perspective of the terminal device in conjunction with FIG. 6. Hereinafter, a detailed description of the method for information transmission according to an embodiment of the disclosure will be provided from the perspective of the network device in conjunction with FIG. 7. It is to be understood that the operations executed by the network device correspond to the operations executed by the terminal device. For brevity, repetitive descriptions will be appropriately omitted in the following contents.

FIG. 7 illustrates a method for information transmission according to an embodiment of the disclosure. The method may include the following operations S210, S220.

In operation 210, a network device receives first information. The first information indicates one or multiple reference signal groups, and each of the one or the multiple reference signal groups includes one or multiple reference signals.

In operation 220, the network device receives second information. The second information indicates a transmission parameter set associated with each of the one or the multiple reference signal groups. The transmission parameter set is used to represent a terminal device capability corresponding to its associated reference signal group in a terminal device.

In some embodiments, the reference signal group includes one or more of:
a channel state information reference signal (CSI-RS) group;
a synchronization signal block (SSB) group; or
a sounding reference signal (SRS) group.

In some embodiments, the first information may include identification information of respective reference signals in each reference signal group.

In some embodiments, the second information includes the transmission parameter set associated with each reference signal group.

In some embodiments, the second information includes index information of the transmission parameter set associated with each reference signal group, and the index information is used to determine, among multiple transmission parameter sets, the transmission parameter set associated with each reference signal set.

In some embodiments, the multiple transmission parameter sets are predefined, or the multiple transmission parameter sets are determined based on third information from the terminal device. The third information includes the multiple transmission parameter sets.

In some embodiments, the transmission parameter set includes one or more of:
index information of a sounding reference signal (SRS) resource set;
a maximum number of supported SRS ports;
a maximum number of transmission layers;
a maximum number of SRS resources in the SRS resource set; or
capability of the SRS resource set.

In some embodiments, the capability of the SRS resource set includes one or more of:
a maximum number of SRS resource sets supported by each band width part (BWP), a maximum number of SRS resources supported by each BWP, or a maximum number of SRS ports supported by each BWP.

In some embodiments, each reference signal group is associated with one or multiple transmission parameter sets.

In some embodiments, in case that the reference signal group is associated with one transmission parameter set, the reference signal group includes one reference signal, or the reference signal group includes multiple reference signals, where the multiple reference signals correspond to a same terminal device capability.

In some embodiments, in case that the reference signal group is associated with multiple transmission parameter sets, the reference signal group includes multiple reference signals. The multiple reference signals are associated with the multiple transmission parameter sets respectively.

In some embodiments, the first information and/or the second information is carried in a measurement report.

In some embodiments, the measurement report further includes fourth information.

The fourth information indicates an RSRP and/or an SINR of each reference signal in each reference signal group.

In some embodiments, the fourth information includes an RSRP and/or an SINR of each reference signal in each reference signal group.

In some embodiments, the fourth information includes one or more of:
first indication information for indicating a target reference signal group, where the target reference signal group is any one of the multiple reference signal groups;
an RSRP and/or an SINR of each target reference signal in the target reference signal group; or
for each of reference signal groups, except the target reference signal group, among the plurality of reference signal groups, a differential value between an RSRP of each reference signal in the reference signal group and an RSRP of a respective associated target reference signal, and/or a differential value between an SINR of each reference signal in the reference signal group and an SINR of a respective associated target reference signal.

In some embodiments, the fourth information includes one or more of:
first indication information for indicating a target reference signal group, where the target reference signal group is any one of the multiple reference signal groups;
an RSRP and/or an SINR of a first target reference signal in the target reference signal group, where the first target reference signal is any one of multiple target reference signals in the target reference signal group;
for each of target reference signals, except the first target reference signal, in the target reference signal group, a differential value between an RSRP of the target reference signal and an RSRP of the first target reference signal, and/or a differential value between an SINR of the target reference signal and an SINR of the first target reference signal; or
for each of reference signal groups, except the target reference signal group, among the multiple reference signal groups, a differential value between an RSRP of each reference signal in the reference signal group and the RSRP of the first target reference signal, and/or a differential value between an SINR of each reference signal in the reference signal group and the SINR of the first target reference signal.

In some embodiments, the fourth information further includes second indication information.

The second indication information indicates the first target reference signal.

In some embodiments, the measurement report is a channel state information (CSI) measurement report.

In some embodiments, in case that the reference signal group includes multiple reference signals, different reference signals in the reference signal group correspond to different reference signal resource sets.

In some embodiments, in case that each reference signal group includes multiple reference signals, the terminal device is configured to perform one or more of the following operations.

The multiple reference signals in each reference signal group are simultaneously received and/or simultaneously sent by the terminal device.

Data are simultaneously received and/or simultaneously sent by the terminal device on a spatial filter determined by the multiple reference signals in each reference signal group.

The method for information transmission according to an embodiment of the disclosure will be described in detail in combination with the application scenarios.

### Embodiment 1

In this embodiment, the terminal device sends the first information and the second information to the network device. The first information may include a group of reference signal identification information, and the second information may include a transmission parameter set(s) associated with the group of reference signal identification information.

For example, the terminal device may send to the network device a group of CRIs, or a group of SSBRIs, or a group of SRSRIs.

It is to be noted that, the terminal device may send the first information and the second information to the network device through a first report. The first report may be carried in the CSI measurement report.

The group of reference signal identification information may include p pieces of reference signal identification information, where P is an integer greater than or equal to 2. It is to be understood that the terminal device may simultaneously receive and/or send reference signals indicated by the p pieces of reference signal identification information, and that the terminal device may simultaneously receive and/or send data on a spatial filter determined by the p pieces of reference signal identification information.

In this embodiment, p pieces of different reference signal identification information may correspond to different reference signal resource sets. For example, if the first information includes a group of CRIs, the p CRIs in the group of CRIs may correspond to p different CSI-RS resource sets. If the first information includes a group of SSBRIs, the p SSBRIs in the group of SSBRIs may correspond to p different SSB resource sets. If the first information includes a group of SRSRIs, the p SSBRIs in the group of SRSRIs may correspond to p different SRS resource sets.

In one possible implementation, the second information may include one transmission parameter set associated with the group of reference signal identification information. That is to say, the p pieces of reference signal identification information in the group of reference signal identification information may be associated with one transmission parameter set.

It is to be understood that a group of reference signal identification information being associated with one transmission parameter set may be applicable to scenarios where each panel has identical capability.

For example, Table 1 illustrates the contents of the first report in this implementation.

**Table 1**

| First report | Contents of the first report |
|---|---|
| There may be multiple first reports, and this is the n-th first report | p pieces of reference signal identification information |
| | one transmission parameter set associated with the p pieces of reference signal identification information |

In addition, the first report may further include an RSRP and/or an SINR corresponding to each of the reference signals indicated by the p pieces of reference signal identification information.

In another possible implementation, the second information may include p transmission parameter sets respectively associated with the p pieces of reference signal identification information in the group of reference signal identification information.

It is to be understood that in this implementation, the terminal device may report p transmission parameter sets respectively associated with p pieces of reference signal identification information, which can be applied to scenarios where the terminal device capabilities associated with respective panels are different, and thus the reporting method is thus more flexible.

For example, Table 2 illustrates the contents of the first report in this implementation.

**Table 2**

| First report | Contents of the first report |
|---|---|
| | p pieces of reference signal identification information, such as CRI_{1,1}, CRI_{1,2}, ..., and CRI_{1, p}; or SSBRI_{1,1}, SSBRI_{1,2}, ..., and SSBRI_{1, p}; or SRSRI_{1,1}, SRSRI_{1,2}, ..., and SRSRI_{1, p} |
| There may be multiple first reports, and this is the n-th first report | Transmission parameter set 1 corresponding to CRI_{1,1}, SSBRI_{1,1} or SRSRI_{1,1} |
| | Transmission parameter set 2 corresponding to CRI_{1,2}, SSBRI_{1,2} or SRSRI_{1,2} |
| | ...... |
| | Transmission parameter set p corresponding to CRI_{1,}p, SSBRI_{1,p} or SRSRI_{1,p} |

In addition, the first report may further include an RSRP and/or an SINR corresponding to each of the reference signals indicated by the p pieces of reference signal identification information.

### Embodiment 2

In this embodiment, the terminal device sends the first information and the second information to the network device. The first information may include k groups of reference signal identification information, and the second information may include a transmission parameter set(s) associated with each of the k groups of reference signal identification information. k is an integer greater than or equal to 2.

In an example, the terminal device may send to the network device k groups of CRIs, or k groups of SSBRIs, or k groups of SRSRIs.

It is to be noted that, the terminal device may send the first information and the second information to the network device through a first report. The first report may be carried in the CSI measurement report.

Each of the k groups of reference signal identification information may include p pieces of reference signal identification information. P is an integer greater than or equal to 2.

It is to be understood that, the terminal device may simultaneously receive and/or send reference signals indicated by each of the k groups of reference signal identification information, or that the terminal device may simultaneously receive and/or send data on a spatial filter determined by reference signals indicated by each of the k groups of reference signal identification information. The terminal device reports multiple groups of reference signal identification information at one time, which can enhance the flexibility of beam reporting.

In one possible implementation, the second information may include k transmission parameter sets associated with the k groups of reference signal identification information. That is to say, each group of reference signal identification information may be associated with one transmission parameter set.

It is to be understood that each group of reference signal identification information being associated with one transmission parameter set may be applicable to scenarios where each panel has identical capability.

For example, Table 3 illustrates the contents of the first report in this implementation.

**Table 3**

| First report | Contents of the first report |
|---|---|
| | First group of reference signal identification information |
| | Second group of reference signal identification information |
| | ... |
| | k-th group of reference signal identification information |
| n-th first report | Transmission parameter set 1 associated with the first group of reference signal identification information |
| | ... |
| | Transmission parameter set k associated with the k-th group of reference signal identification information |

In addition, the first report may further include an RSRP and/or an SINR corresponding to each of the reference signals indicated by p pieces of reference signal identification information in each group of reference signal identification information.

Exemplarily, the first report may include a resource set indication field (i.e., the first indication information mentioned above). The resource set indication field is used to indicate a certain group of reference signal identification information among the k groups of reference signal identification information.

Optionally, the resource set indication field may indicate a certain group of reference signal identification information by means of bitmap. Specifically, the resource set indication field may include k bits, which are respectively in one-to-one correspondence with the k groups of reference signal identification information. When the value of a certain bit in the resource set indication field is a first value (for example, 0 or 1), it indicates that the RSRP and/or the SINR corresponding to each of the p reference signals indicated by a certain group of reference signal identification information corresponding to the bit are reference values.

Optionally, the resource set indication field may also indicate a certain group of reference signal identification information by the mapping result of a bit field. Specifically, the resource set indication field includes q bits, and different mapping results of the q-bit field may correspond to different groups of reference signal identification information. For example, when the q-bit field maps to an index value of 0, it indicates the first group of reference signal identification information. When the q-bit field maps to an index value of 1, it indicates the second group of reference signal identification information; and so on. When the q-bit field maps to an index value of 2^{q}-1, it indicates the 2^{q}-th group of reference signal identification information.

Hereinafter, the contents included in the first report will be described by taking the resource set indication field indicating the first group of reference signal identification information as an example.

In one example, the first report may include an RSRP and/or an SINR of each of the p reference signals indicated by the first group of reference signal identification information, and an RSRP differential value and/or an SINR differential value of each of the p reference signals indicated by each group of reference signal identification information from the second group of reference signal identification information to the k-th group of reference signal identification information.

In another example, the first report may include an RSRP and/or an SINR corresponding to a first reference signal in reference signals indicated by the first group of reference signal identification information, an RSRP differential value and/or an SINR differential value corresponding to each of other reference signals, except the first reference signal, in reference signals indicated by the first group of reference signal identification information, and an RSRP differential value and/or an SINR differential value of each of the reference signals indicated by the p pieces of reference signal identification information in each group of reference signal identification information from the second group of reference signal identification information to the k-th group of reference signal identification information.

In another possible implementation, the second information may include p transmission parameter sets respectively associated with p pieces of reference signal identification information in each of the k groups of reference signal identification information. That is to say, each of the k groups of reference signal identification information may be used for reporting of p transmission parameter sets, which are respectively associated with p pieces of reference signal identification information in each group of reference signal identification information.

For example, Table 4 illustrates the contents of the first report in this implementation.

**Table 4**

| First report | Contents of the first report |
|---|---|
| | First group of reference signal identification information, such as CRI_{1,1}, CRI_{1,2}, ..., and CRI_{1, p}; or SSBRI_{1,1}, SSBRI_{1,2}, ..., and SSBRI_{1, p}; or SRSRI_{1,1}, SRSRI_{1,2}, ..., and SRSRI_{1, p} |
| | Second group of reference signal identification information, such as CRI_{2,1}, CRI_{2,2}, ..., and CRI_{2, p}; or SSBRI_{2,1}, SSBRI_{2,2}, ..., and SSBRI_{2, p}; or SRSRI_{1,1}, SRSRI_{2,2}, ..., and SRSRI_{2, p} |
| n-th CSI report | ... |
| | k-th group of reference signal identification information, such as CRI_{k, 1}, CRI_{k, 2}, ..., and CRI_{k, p}; or SSBRI_{k, 1}, SSBRI_{k, 2}, ..., and SSBRI_{k, p}; or SRSRI_{k, 1}, SRSRI_{k, 2}, ..., and SRSRI_{k, p} |
| | Transmission parameter set 1 associated with first piece of reference signal identification information in the first group of reference signal identification information |
| | ... |
| | Transmission parameter set p associated with p-th piece of reference signal identification information in the first group of reference signal identification information |
| | ... |
| | Transmission parameter set (k-1)p+1 associated with first piece of reference signal identification information in the k-th group of reference signal identification information |
| | Transmission parameter set k*p associated with p-th piece of reference signal identification information in the k-th group of reference signal identification information |

In addition, the first report may further include an RSRP and/or an SINR respectively corresponding to each of the p reference signals indicated by each group of reference signal identification information. It is to be noted that in this implementation, the RSRP and/or the SINR corresponding to each reference signal in the first report is similar to that in the previous implementation (that is, the second information includes k transmission parameter sets associated with k groups of reference signal identification information). For brevity, details will not be repeated herein again.

The preferred implementations of the disclosure have been described in detail as above with reference to the accompanying drawings, but the disclosure is not limited to the specific details in the above implementations. Within the scope of the technical concept of the disclosure, various simple modifications may be made to the technical solutions of the disclosure, and all these simple modifications belong to the scope of protection of the disclosure. For example, various specific technical features described in the above specific implementations may be combined in any suitable manner without contradiction. In order to avoid unnecessary repetition, various possible combinations will not be described any more in the disclosure. For another example, various different implementations of the disclosure may also be combined arbitrarily, as long as they do not depart from the idea of the disclosure, which should also be considered as the contents disclosed in the disclosure. For another example, provided that there is no conflict, the embodiments and/or technical features within the embodiments described in the disclosure may be arbitrarily combined with related art, and the technical solutions obtained after the combination should also fall within the scope of protection of the disclosure.

It should further be understood that, in various method embodiments of the disclosure, the size of the sequence numbers of the aforementioned processes do not imply a sequence of execution. The sequence of execution of the processes should be determined based on functions thereof and inherent logics, and the size of the sequence numbers should not constitute any limitation on the implementation processes of the embodiments of the disclosure. Furthermore, in the embodiments of the disclosure, the terms "downlink", "uplink" and "sidelink" are used to represent a transmission direction of a signal or data. Herein, the "downlink" is used to represent that the transmission direction of the signal or data is a first direction sent from a station to a user equipment of a cell; the "uplink" is used to represent that the transmission direction of the signal or data is a second direction sent from the user equipment of the cell to the station; and the "sidelink" is used to represent that the transmission direction of the signal or data is a third direction sent from a user equipment 1 to a user equipment 2. For example, a "downlink signal" represents that the signal is transmitted in the first direction. In addition, in the embodiments of the disclosure, the term "and/or" merely indicates an association relationship for describing associated objects, and represents that there are three kinds of relationships. Specifically, "A and/or B" may represent three situations, i.e., independent existence of A, existence of both A and B, and independent existence of B. In addition, in this context, the character "/" generally indicates that the anterior and posterior associated objects are in a kind of "or" relationship.

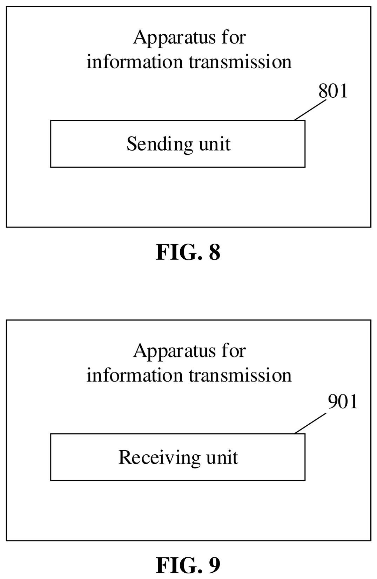

FIG. 8 is a first schematic diagram of a compositional structure of an apparatus for information transmission according to an embodiment of the disclosure, and the apparatus is applied to a terminal device. As illustrated in FIG. 8, the apparatus for information transmission includes a sending unit 801.

The sending unit 801 is configured to send first information. The first information indicates one or multiple reference signal groups, and each of the one or the multiple reference signal groups includes one or multiple reference signals.

The sending unit 802 is further configured to send second information. The second information indicates a transmission parameter set associated with each of the one or the multiple reference signal groups. The transmission parameter set is used to represent a terminal device capability corresponding to its associated reference signal group.

In some embodiments, the reference signal group includes one or more of:
a channel state information reference signal (CSI-RS) group;
a synchronization signal block (SSB) group; or
a sounding reference signal (SRS) group.

In some embodiments, the first information includes identification information of respective reference signals in each reference signal group.

In some embodiments, the second information includes the transmission parameter set associated with each reference signal group.

In some embodiments, the second information includes index information of the transmission parameter set associated with each reference signal group, and the index information is used to determine, among multiple transmission parameter sets, the transmission parameter set associated with each reference signal set.

In some embodiments, the multiple transmission parameter sets are predefined, or the multiple transmission parameter sets are determined based on third information from the terminal device. The third information includes all of the multiple transmission parameter sets.

In some embodiments, the transmission parameter set includes one or more of:
index information of sounding reference signal (SRS) resource set;
a maximum number of supported SRS ports;
a maximum number of transmission layers;
a maximum number of SRS resources in the SRS resource set; or
capability of the SRS resource set.

In some embodiments, the capability of the SRS resource set includes one or more of:
a maximum number of SRS resource sets supported by each band width part (BWP), a maximum number of SRS resources supported by each BWP, or a maximum number of SRS ports supported by each BWP.

In some embodiments, each reference signal group is associated with one or multiple transmission parameter sets.

In some embodiments, in case that the reference signal group is associated with one transmission parameter set, the reference signal group includes one reference signal, or the reference signal group includes multiple reference signals and the multiple reference signals correspond to a same terminal device capability.

In some embodiments, in case that the reference signal group is associated with multiple transmission parameter sets, the reference signal group includes multiple reference signals. The multiple reference signals are associated with the multiple transmission parameter sets respectively.

In some embodiments, the first information and/or the second information is carried in a measurement report.

In some embodiments, the measurement report further includes fourth information.

The fourth information indicates an RSRP and/or an SINR of each reference signal in each reference signal group.

In some embodiments, the fourth information includes an RSRP and/or an SINR of each reference signal in each reference signal group.

In some embodiments, the fourth information includes one or more of:
first indication information for indicating a target reference signal group, where the target reference signal group is any one of the multiple reference signal groups;
an RSRP and/or an SINR of each target reference signal in the target reference signal group; or
for each of reference signal groups, except the target reference signal group, among the plurality of reference signal groups, a differential value between an RSRP of each reference signal in the reference signal group and an RSRP of a respective associated target reference signal, and/or a differential value between an SINR of each reference signal in the reference signal group and an SINR of a respective associated target reference signal.

In some embodiments, the fourth information includes one or more of:
first indication information for indicating a target reference signal group, where the target reference signal group is any one of the multiple reference signal groups;
an RSRP and/or an SINR of a first target reference signal in the target reference signal group, where the first target reference signal is any one of multiple target reference signals in the target reference signal group;
for each of target reference signals, except the first target reference signal, in the target reference signal group, a differential value between an RSRP of the target reference signal and an RSRP of the first target reference signal, and/or a differential value between an SINR of the target reference signal and an SINR of the first target reference signal; or
for each of reference signal groups, except the target reference signal group, among the multiple reference signal groups, a differential value between an RSRP of each reference signal in the reference signal group and the RSRP of the first target reference signal, and/or a differential value between an SINR of each reference signal in the reference signal group and the SINR of the first target reference signal.

In some embodiments, the fourth information further includes second indication information.

The second indication information indicates the first target reference signal.

In some embodiments, the measurement report is a channel state information (CSI) measurement report.

In some embodiments, in case that the reference signal group includes multiple reference signals, different reference signals in the reference signal group correspond to different reference signal resource sets.

In some embodiments, in case that each reference signal group includes multiple reference signals, the terminal device is configured to perform one or more of the following operations.

The multiple reference signals in each reference signal group are simultaneously received and/or simultaneously sent by the terminal device.

Data are simultaneously received and/or simultaneously sent by the terminal device on a spatial filter determined by the multiple reference signals in each reference signal group.

FIG. 9 is a second schematic diagram of a compositional structure of an apparatus for information transmission according to an embodiment of the disclosure, and the apparatus is applied to a network device. As illustrated in FIG. 9, the apparatus for information transmission includes a receiving unit 901.

The receiving unit 901 is configured to receive first information. The first information indicates one or multiple reference signal groups, and each of the one or the multiple reference signal groups includes one or multiple reference signals.

The receiving unit 901 is further configured to receive second information. The second information indicates a transmission parameter set associated with each of the one or the multiple reference signal groups. The transmission parameter set is used to represent a terminal device capability corresponding to its associated reference signal group in a terminal device.

In some embodiments, the reference signal group includes one or more of:
a channel state information reference signal (CSI-RS) group;
a synchronization signal block (SSB) group; or
a sounding reference signal (SRS) group.

In some embodiments, the first information includes identification information of respective reference signals in each reference signal group.

In some embodiments, the second information includes the transmission parameter set associated with each reference signal group.

In some embodiments, the second information includes index information of the transmission parameter set associated with each reference signal group, and the index information is used to determine, among multiple transmission parameter sets, the transmission parameter set associated with each reference signal set.

In some embodiments, the multiple transmission parameter sets are predefined, or the multiple transmission parameter sets are determined based on third information from the terminal device. The third information includes the multiple transmission parameter sets.

In some embodiments, the transmission parameter set includes one or more of:
index information of sounding reference signal (SRS) resource set;
a maximum number of supported SRS ports;
a maximum number of transmission layers;
a maximum number of SRS resources in the SRS resource set; or
capability of the SRS resource set.

In some embodiments, the capability of the SRS resource set includes one or more of: a maximum number of SRS resource sets supported by each band width part (BWP), a maximum number of SRS resources supported by each BWP, or a maximum number of SRS ports supported by each BWP.

In some embodiments, each reference signal group is associated with one or multiple transmission parameter sets.

In some embodiments, in case that the reference signal group is associated with one transmission parameter set, the reference signal group includes one reference signal, or the reference signal group includes multiple reference signals and the multiple reference signals correspond to a same terminal device capability.

In some embodiments, in case that the reference signal group is associated with multiple transmission parameter sets, the reference signal group includes multiple reference signals. The multiple reference signals are associated with the multiple transmission parameter sets.

In some embodiments, the first information and/or the second information is carried in a measurement report.

In some embodiments, the measurement report further includes fourth information.

The fourth information indicates an RSRP and/or an SINR of each reference signal in each reference signal group.

In some embodiments, the fourth information includes an RSRP and/or an SINR of each reference signal in each reference signal group.

In some embodiments, the fourth information includes one or more of:
first indication information for indicating a target reference signal group, where the target reference signal group is any one of the multiple reference signal groups;
an RSRP and/or an SINR of each target reference signal in the target reference signal group; or
for each of reference signal groups, except the target reference signal group, among the plurality of reference signal groups, a differential value between an RSRP of each reference signal in the reference signal group and an RSRP of a respective associated target reference signal, and/or a differential value between an SINR of each reference signal in the reference signal group and an SINR of a respective associated target reference signal.

In some embodiments, the fourth information includes one or more of:
first indication information for indicating a target reference signal group, where the target reference signal group is any one of the multiple reference signal groups;
an RSRP and/or an SINR of a first target reference signal in the target reference signal group, where the first target reference signal is any one of multiple target reference signals in the target reference signal group;
for each of target reference signals, except the first target reference signal, in the target reference signal group, a differential value between an RSRP of the target reference signal and an RSRP of the first target reference signal, and/or a differential value between an SINR of the target reference signal and an SINR of the first target reference signal; or
for each of reference signal groups, except the target reference signal group, among the multiple reference signal groups, a differential value between an RSRP of each reference signal in the reference signal group and the RSRP of the first target reference signal, and/or a differential value between an SINR of each reference signal in the reference signal group and the SINR of the first target reference signal.

In some embodiments, the fourth information further includes second indication information.

The second indication information indicates the first target reference signal.

In some embodiments, the measurement report is a channel state information (CSI) measurement report.

In some embodiments, in case that the reference signal group includes multiple reference signals, different reference signals in the reference signal group correspond to different reference signal resource sets.

In some embodiments, in case that each reference signal group includes multiple reference signals, the terminal device is configured to perform one or more of the following operations.

The multiple reference signals in each reference signal group are simultaneously received and/or simultaneously sent by the terminal device.

Data are simultaneously received and/or simultaneously sent by the terminal device on a spatial filter determined by the multiple reference signals in each reference signal group.

It is to be understood by those skilled in the art that the related description of the aforementioned apparatus for information transmission in the embodiments of the disclosure may be understood with reference to the related description of the method for information transmission in the embodiments of the disclosure.

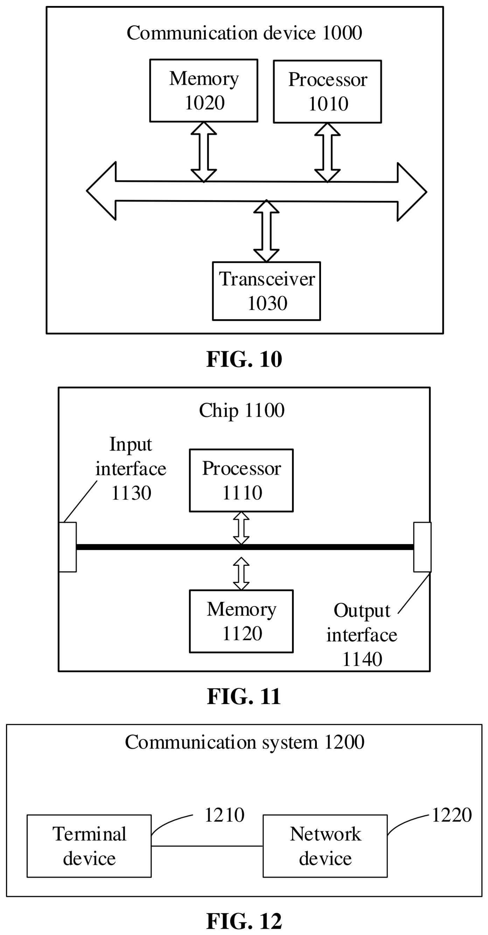

FIG. 10 is a schematic structural illustration of a communication device 1000 according to an embodiment of the disclosure. The communication device may be a terminal device or a network device. The communication device 1000 illustrated in FIG. 10 includes a processor 1010 that may invoke and execute a computer program from a memory to implement the methods in the embodiments of the disclosure.

Optionally, as illustrated in FIG. 10, the communication device 1000 may further include a memory 1020. The processor 1010 may invoke and execute a computer program from the memory 1020 to implement the methods in the embodiments of the disclosure.

The memory 1020 may be a separate device independent of the processor 1010, or may be integrated in the processor 1010.

Optionally, as illustrated in FIG. 10, the communication device 1000 may further include a transceiver 1030, and the processor 1010 may control the transceiver 1030 to communicate with other devices. Specifically, the transceiver may transmit information or data to other devices, or receive information or data from other devices.

The transceiver 1030 may include a transmitter and a receiver. The transceiver 1030 may further include one or more antennas.

In an embodiment, the communication device 1000 may specifically be the network device in the embodiments of the disclosure, and the communication device 1800 may implement corresponding processes implemented by the network device in each of the methods in the embodiments of the disclosure. For brevity, details will not be repeated herein again.

In an embodiment, the communication device 1000 may specifically be the mobile terminal/the terminal device in the embodiments of the disclosure, and the communication device 1000 may implement corresponding processes implemented by the mobile terminal/the terminal device in each of the methods in the embodiments of the disclosure. For brevity, details will not be repeated herein again

FIG. 11 is a schematic structural diagram of a chip according to an embodiment of the disclosure. The chip 1100 illustrated in FIG. 11 includes a processor 1110 that may invoke and execute a computer program from a memory to implement the methods in the embodiments of the disclosure.

Optionally, as illustrated in FIG. 11, the chip 1100 may further include a memory 1120. The processor 1110 may invoke and execute a computer program from the memory 1120 to implement the methods in the embodiments of the disclosure.

The memory 1120 may be a separate device independent of the processor 1110, or may be integrated in the processor 1110.

Optionally, the chip 1100 may further include an input interface 1130. The processor 1110 may control the input interface 1130 to communicate with other devices or chips. Specifically, the input interface 1130 may acquire information or data from other devices or chips.

Optionally, the chip 1100 may further include an output interface 1140. The processor 1110 may control the output interface 1140 to communicate with other devices or chips. Specifically, the output interface 1140 may output information or data to other devices or chips.

Optionally, the chip may be applied to the network device in the embodiments of the disclosure, and the chip may implement corresponding processes implemented by the network device in each of the methods in the embodiments of the disclosure. For brevity, details will not be repeated herein again.

Optionally, the chip may be applied to the mobile terminal/the terminal device in the embodiments of the disclosure, and the chip may implement corresponding processes implemented by the mobile terminal/the terminal device in each of the methods in the embodiments of the disclosure. For brevity, details will not be repeated herein again.

It is to be understood that the chip mentioned in the embodiments of the disclosure may also be referred to as a system-level chip, a system chip, a chip system, or a system-on-chip, etc.

An embodiment of the disclosure further provides a computer storage medium storing one or more programs. The one or more programs are executable by one or more processors to implement the methods in the embodiments of the disclosure.

FIG. 12 is a schematic block diagram of a communication system 1200 according to an embodiment of the disclosure. As illustrated in FIG. 12, the communication system 1200 includes a terminal device 1210 and a network device 1220.

The terminal device 1210 may be configured to implement the corresponding functions implemented by the terminal device in the foregoing method, and the network device 1220 may be configured to implement the corresponding functions implemented by the network device in the foregoing method. For brevity, details will not be repeated herein again.

It is to be understood that the processor in the embodiment of the disclosure may be an integrated circuit chip with a signal processing capability. In implementation, the operations of the above method embodiments may be accomplished by an integrated logic circuit of the hardware in the processor or the instructions in the form of software. The processor described above may be a general-purpose processor, a digital signal processor (DSP), an application specific integrated circuit (ASIC), a field programmable gate array (FPGA) or another programmable logic device, a discrete gate or transistor logic device, or a discrete hardware component. Various methods, operations and logic block diagrams disclosed in the embodiments of the disclosure may be implemented or performed. The general-purpose processor may be a microprocessor, or may be any conventional processor or the like. The operations of the methods disclosed in the embodiments of the disclosure may be directly embodied to be executed and completed by a hardware decoding processor, or by a combination of hardware and software modules in the decoding processor. The software module may be located in a mature storage medium in the field, such as a random access memory, a flash memory, a read-only memory, a programmable read-only memory, or an electrically erasable programmable memory, a register, etc. The storage medium is located in the memory, and the processor reads information in the memory and completes the operations of the foregoing method in combination with its hardware.

It is understood that in the embodiment of the disclosure, the memory may be a volatile memory or a non-volatile memory, or may include both a volatile memory and a non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM), which serves as an external cache. It is exemplarily but unlimitedly described that RAMs in various forms may be adopted, such as a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM) and a direct rambus RAM (DRRAM). It is to be noted that each of the memories of the systems and methods described herein are intended to include, but not limited to, memories of these and any other suitable types.

It is to be understood that each of the aforementioned memories is described only exemplarily rather than limitedly. For example, the memory in the embodiment of the disclosure may further be an SRAM, a DRAM, an SDRAM, a DDR SDRAM, an ESDRAM, an SLDRAM and a DR RAM, etc. That is to say, the memories in the embodiments of the disclosure are intended to include, but not limited to, memories of these and any other suitable types.

In an embodiment of the disclosure, a computer-readable storage medium for storing a computer program is further provided.

Optionally, the computer-readable storage medium may be applied to the network device in the embodiments of the disclosure, and the computer program is executed to enable a computer to execute corresponding processes implemented by the network device in each of the methods in the embodiments of the disclosure. For brevity, details will not be repeated herein again.

Optionally, the computer-readable storage medium may be applied to the mobile terminal/the terminal device in the embodiments of the disclosure, and the computer program is executed to enable the computer to execute corresponding processes implemented by the mobile terminal/the terminal device in each of the methods in the embodiments of the disclosure. For brevity, details will not be repeated herein again.

In an embodiment of the disclosure, a computer program product including computer program instructions is further provided.

Optionally, the computer program product may be applied to the network device in the embodiments of the disclosure, and the computer program instructions are executed to enable the computer to execute corresponding processes implemented by the network device in each of the methods in the embodiments of the disclosure. For brevity, details will not be repeated herein again.

Optionally, the computer program product may be applied to the mobile terminal/the terminal device in the embodiments of the disclosure, and the computer program instructions cause the computer to execute corresponding processes implemented by the mobile terminal/the terminal device in each of methods in the embodiments of the disclosure. For brevity, details will not be repeated herein again.

In an embodiment of the disclosure, a computer program is further provided.

Optionally, the computer program may be applied to the network device in the embodiments of the disclosure. The computer program that, when executed by a computer, causes the computer to execute corresponding processes implemented by the network device in each of methods in the embodiments of the disclosure. For brevity, details will not be repeated herein again.

Optionally, the computer program may be applied to the mobile terminal/the terminal device in the embodiments of the disclosure. The computer program that, when executed by a computer, causes the computer to execute corresponding processes implemented by the mobile terminal/the terminal device in each of methods in the embodiments of the disclosure. For brevity, details will not be repeated herein again.

Those of ordinary skilled in the art may appreciate that the units and algorithmic operations of each of the examples described in the embodiments disclosed herein may be implemented in electronic hardware, or a combination of computer software and electronic hardware. Whether these functions are performed in hardware or software depends on the specific application and design constraints of the technical solutions. The professionals may use different methods to implement the described functions for each specific application, but such implementations shall not be considered as going beyond the scope of the disclosure.

Those skilled in the art may clearly understand that, for the specific working processes of the systems, devices, and units described above, reference may be made to the corresponding processes in the aforementioned method embodiments, which will not be repeated herein for convenience and conciseness of the description.

In several embodiments provided in the disclosure, it is to be understood that the disclosed systems, devices, and methods may be implemented in other ways. For example, the device embodiments described above are only schematic. For example, the partition of the units is only a kind of logical functional partition, and other partition manners may be adopted during practical implementation. For example, multiple units or components may be combined or integrated into another system, or some features may be omitted or not implemented. In addition, coupling or direct coupling or communication connection between various displayed or discussed components may be indirect coupling or communication connection, implemented through some interfaces, devices or units, and may be an electrical or mechanical connection or in other forms.

The units described as separate components may or may not be physically separate, and the components displayed as units may or may not be physical units, that is, they may be located in one place or may be distributed to multiple network units. Part or all of the units may be selected based on the actual needs to achieve the purpose of the solution of the present embodiment.

In addition, various functional units in the embodiments of the disclosure may be integrated into one processing unit, or they may be physically exist separately as individual units, or two or more units may be integrated into one unit.

The functions may be stored in a computer readable storage medium if implemented in the form of software functional units and sold or used as a stand-alone product. Based on such understanding, the essential part of the technical solutions of the disclosure or a part of the technical solutions that contributes to the related art or the part of the technical solutions may be embodied in a form of a software product. The software product is stored in a storage medium and includes instructions which cause a computer device (which may be a personal computer, a server, or a network device, etc.) to perform all or part of the operations in the methods described in various embodiments of the disclosure. The foregoing storage medium includes various media capable of storing program codes, such as a USB disk, a mobile hard disk, an ROM, an RAM, a magnetic disk, an optical disk, or the like.

The above description is only the specific implementations of the disclosure; however, the scope of protection of the disclosure is not limited thereto. Variations or replacements which can be readily conceived by those skilled in the art within the technical scope disclosed by the disclosure shall fall within the scope of protection of the disclosure. Therefore, the scope of protection of the disclosure shall be determined by the scope of protection of the claims.

## Claims

1. A method for information transmission, comprising:
sending, by a terminal device, first information, wherein the first information indicates one or a plurality of reference signal groups, and each of the one or the plurality of reference signal groups comprises one or a plurality of reference signals; and
sending, by the terminal device, second information, wherein the second information indicates a transmission parameter set associated with each of the one or the plurality of reference signal groups, and the transmission parameter set is used to represent a terminal device capability corresponding to its associated reference signal group.

2. The method of claim 1, wherein the reference signal group comprises one or more of:
a channel state information reference signal (CSI-RS) group;
a synchronization signal block (SSB) group; or
a sounding reference signal (SRS) group.

3. The method of claim 1 or 2, wherein
the first information comprises identification information of each reference signal in each reference signal group.

4. The method of any one of claims 1 to 3, wherein
the second information comprises the transmission parameter set associated with each reference signal group.

5. The method of any one of claims 1 to 3, wherein
the second information comprises index information of the transmission parameter set associated with each reference signal group, and the index information is used to determine, among a plurality of transmission parameter sets, the transmission parameter set associated with each reference signal set.

6. The method of claim 5, wherein
the plurality of transmission parameter sets are predefined, or the plurality of transmission parameter sets are determined based on third information from the terminal device, wherein the third information comprises the plurality of transmission parameter sets.

7. The method of any one of claims 1 to 6, wherein the transmission parameter set comprises one or more of:
index information of a sounding reference signal (SRS) resource set;
a maximum number of supported SRS ports;
a maximum number of transmission layers;
a maximum number of SRS resources in the SRS resource set; or
capability of the SRS resource set.

8. The method of claim 7, wherein the capability of the SRS resource set comprises one or more of:
a maximum number of SRS resource sets supported by each band width part (BWP), a maximum number of SRS resources supported by each BWP, or a maximum number of SRS ports supported by each BWP.

9. The method of any one of claims 1 to 8, wherein
each reference signal group is associated with one or a plurality of transmission parameter sets.

10. The method of claim 9, wherein
in case that the reference signal group is associated with one transmission parameter set, the reference signal group comprises one reference signal, or the reference signal group comprises a plurality of reference signals and the plurality of reference signals correspond to a same terminal device capability.

11. The method of claim 9, wherein
in case that the reference signal group is associated with a plurality of transmission parameter sets, the reference signal group comprises a plurality of reference signals, wherein the plurality of reference signals are associated with the plurality of transmission parameter sets respectively.

12. The method of any one of claims 1 to 11, wherein the first information and/or the second information is carried in a measurement report.

13. The method of claim 12, wherein the measurement report further comprises:
fourth information for indicating a reference signal receiving power (RSRP) and/or a signal to interference plus noise ratio (SINR) of each reference signal in each reference signal group.

14. The method of claim 13, wherein
the fourth information comprises an RSRP and/or an SINR of each reference signal in each reference signal group.

15. The method of claim 13, wherein the fourth information comprises one or more of:
first indication information for indicating a target reference signal group, wherein the target reference signal group is any one of the plurality of reference signal groups;
an RSRP and/or an SINR of each target reference signal in the target reference signal group; or
for each of reference signal groups, except the target reference signal group, among the plurality of reference signal groups, a differential value between an RSRP of each reference signal in the reference signal group and an RSRP of a respective associated target reference signal, and/or a differential value between an SINR of each reference signal in the reference signal group and an SINR of a respective associated target reference signal.

16. The method of claim 13, wherein the fourth information comprises one or more of:
first indication information for indicating a target reference signal group, wherein the target reference signal group is any one of the plurality of reference signal groups;
an RSRP and/or an SINR of a first target reference signal in the target reference signal group, wherein the first target reference signal is any one of a plurality of target reference signals in the target reference signal group;
for each of target reference signals, except the first target reference signal, in the target reference signal group, a differential value between an RSRP of the target reference signal and an RSRP of the first target reference signal, and/or a differential value between an SINR of the target reference signal and an SINR of the first target reference signal; or
for each of reference signal groups, except the target reference signal group, among the plurality of reference signal groups, a differential value between an RSRP of each reference signal in the reference signal group and the RSRP of the first target reference signal, and/or a differential value between an SINR of each reference signal in the reference signal group and the SINR of the first target reference signal.

17. The method of claim 16, wherein the fourth information further comprises:
second indication information for indicating the first target reference signal.

18. The method of any one of claims 12 to 17, wherein the measurement report is a channel state information (CSI) measurement report.

19. The method of any one of claims 1 to 18, wherein
in case that the reference signal group comprises a plurality of reference signals, different reference signals in the reference signal group correspond to different reference signal resource sets.

20. The method of any one of claims 1 to 19, wherein in case that each reference signal group comprises a plurality of reference signals, the terminal device is configured to perform one or more of:
simultaneously receiving and/or sending the plurality of reference signals in each reference signal group; or
simultaneously receiving and/or sending data on a spatial filter determined by the plurality of reference signals in each reference signal group.

21. A method for information transmission, comprising:
receiving, by a network device, first information, wherein the first information indicates one or a plurality of reference signal groups, and each of the one or the plurality of reference signal groups comprises one or a plurality of reference signals; and
receiving, by the network device, second information, wherein the second information indicates a transmission parameter set associated with each of the one or the plurality of reference signal groups, and the transmission parameter set is used to represent a terminal device capability corresponding to its associated reference signal group in a terminal device.

22. The method of claim 21, wherein the reference signal group comprises one or more of:
a channel state information reference signal (CSI-RS) group;
a synchronization signal block (SSB) group; or
a sounding reference signal (SRS) group.

23. The method of claim 21 or 22, wherein
the first information comprises identification information of each reference signal in each reference signal group.

24. The method of any one of claims 21 to 23, wherein
the second information comprises the transmission parameter set associated with each reference signal group.

25. The method of any one of claims 21 to 23, wherein
the second information comprises index information of the transmission parameter set associated with each reference signal group, and the index information is used to determine, among a plurality of transmission parameter sets, the transmission parameter set associated with each reference signal set.

26. The method of claim 25, wherein the plurality of transmission parameter sets are predefined, or the plurality of transmission parameter sets are determined based on third information from the terminal device, wherein the third information comprises the plurality of transmission parameter sets.

27. The method of any one of claims 21 to 26, wherein the transmission parameter set comprises one or more of:
index information of sounding reference signal (SRS) resource set;
a maximum number of supported SRS ports;
a maximum number of transmission layers;
a maximum number of SRS resources in the SRS resource set; or
capability of the SRS resource set.

28. The method of claim 27, wherein the capability of the SRS resource set comprises one or more of:
a maximum number of SRS resource sets supported by each band width part (BWP), a maximum number of SRS resources supported by each BWP, or a maximum number of SRS ports supported by each BWP.

29. The method of any one of claims 21 to 28, wherein
each reference signal group is associated with one or a plurality of transmission parameter sets.

30. The method of claim 29, wherein
in case that the reference signal group is associated with one transmission parameter set, the reference signal group comprises one reference signal, or the reference signal group comprises a plurality of reference signals and the plurality of reference signals correspond to a same terminal device capability.

31. The method of claim 29, wherein
in case that the reference signal group is associated with a plurality of transmission parameter sets, the reference signal group comprises a plurality of reference signals, wherein the plurality of reference signals are associated with the plurality of transmission parameter sets.

32. The method of any one of claims 21 to 31, wherein the first information and/or the second information is carried in a measurement report.

33. The method of claim 32, wherein the measurement report further comprises:
fourth information for indicating a reference signal receiving power (RSRP) and/or a signal to interference plus noise ratio (SINR) of each reference signal in each reference signal group.

34. The method of claim 33, wherein
the fourth information comprises an RSRP and/or an SINR of each reference signal in each reference signal group.

35. The method of claim 33, wherein the fourth information comprises one or more of:
first indication information for indicating a target reference signal group, wherein the target reference signal group is any one of the plurality of reference signal groups;
an RSRP and/or an SINR of each target reference signal in the target reference signal group; or
for each of reference signal groups, except the target reference signal group, among the plurality of reference signal groups, a differential value between an RSRP of each reference signal in the reference signal group and an RSRP of a respective associated target reference signal, and/or a differential value between an SINR of each reference signal in the reference signal group and an SINR of a respective associated target reference signal.

36. The method of claim 33, wherein the fourth information comprises one or more of:
first indication information for indicating a target reference signal group, wherein the target reference signal group is any one of the plurality of reference signal groups;
an RSRP and/or an SINR of a first target reference signal in the target reference signal group, wherein the first target reference signal is any one of a plurality of target reference signals in the target reference signal group;
for each of target reference signals, except the first target reference signal, in the target reference signal group, a differential value between an RSRP of the target reference signal and an RSRP of the first target reference signal, and/or a differential value between an SINR of the target reference signal and an SINR of the first target reference signal; or
for each of reference signal groups, except the target reference signal group, among the plurality of reference signal groups, a differential value between an RSRP of each reference signal in the reference signal group and the RSRP of the first target reference signal, and/or a differential value between an SINR of each reference signal in the reference signal group and the SINR of the first target reference signal.

37. The method of claim 36, wherein the fourth information further comprises:
second indication information for indicating the first target reference signal.

38. The method of any one of claims 32 to 37, wherein the measurement report is a channel state information (CSI) measurement report.

39. The method of any one of claims 21 to 38, wherein
in case that the reference signal group comprises a plurality of reference signals, different reference signals in the reference signal group correspond to different reference signal resource sets.

40. The method of any one of claims 21 to 39, wherein in case that each reference signal group comprises a plurality of reference signals, the terminal device is configured to perform one or more of:
simultaneously receiving and/or sending the plurality of reference signals in each reference signal group; or
simultaneously receiving and/or sending data on a spatial filter determined by the plurality of reference signals in each reference signal group.

41. An apparatus for information transmission, applied to a terminal device, the apparatus comprising:
a sending unit, configured to send first information, wherein the first information indicates one or a plurality of reference signal groups, and each of the one or the plurality of reference signal groups comprises one or a plurality of reference signals;
wherein the sending unit is further configured to send second information, wherein the second information indicates a transmission parameter set associated with each of the one or the plurality of reference signal groups, and the transmission parameter set is used to represent a terminal device capability corresponding to its associated reference signal group.

42. An apparatus for information transmission, applied to a terminal device, the apparatus comprising:
a receiving unit, configured to receive first information, wherein the first information indicates one or a plurality of reference signal groups, and each of the one or the plurality of reference signal groups comprises one or a plurality of reference signals;
wherein the receiving unit is further configured to receive second information, wherein the second information indicates a transmission parameter set associated with each of the one or the plurality of reference signal groups, and the transmission parameter set is used to represent a terminal device capability corresponding to its associated reference signal group in a terminal device.

43. A terminal device, comprising: a memory, a processor, and a transceiver, wherein
the transceiver is configured to enable communication with a network device;
the memory stores a computer program executable on the processor; and
the processor, when executing the program in conjunction with the transceiver, implements the method of any one of claims 1 to 20.

44. A network device, comprising: a memory, a processor, and a transceiver, wherein
the transceiver is configured to enable communication with a terminal device;
the memory stores a computer program executable on the processor; and
the processor, when executing the program in conjunction with the transceiver, implements the method of any one of claims 21 to 40.

45. A computer storage medium storing one or more programs, wherein the one or more programs are executable by one or more processors to implement the method of any one of claims 1 to 20 or the method of any one of claims 21 to 40.

46. A chip, comprising a processor configured to invoke and execute a computer program from a memory, to cause a device on which the chip is mounted to perform the method of any one of claims 1 to 20 or the method of any one of claims 21 to 40.

47. A computer program product, comprising a computer storage medium storing a computer program, wherein the computer program comprises instructions executable by at least one processor that, when executed by the at least one processor, implement the method of any one of claims 1 to 20 or the method of any one of claims 21 to 40.

48. A computer program that causes a computer to perform the method of any one of claims 1 to 20 or the method of any one of claims 21 to 40.
